# EUROPEAN PATENT APPLICATION

(11) **EP 1 847 742 A2**
(43) Date of publication of application: **24.10.2007**
(21) Application number: 07075249.8
(22) Date of filing: 04.04.2007
(51) Int. Cl.: F16K 31/06, F16K 37/00

(54) **Solenoid-operated valve with coil for sensing plunger position**

(30) Priority: 19.04.2006 US 406932
(71) Applicant: Delphi Technologies, Inc., Troy, Michigan 48007 (US)
(72) Inventor: Moreno, Alejandro, El Paso, TX 79912 (US); Lin, Yingjie, El Paso, TX 79912 (US)
(74) Representative: Denton, Michael John

(57) **Abstract**

A valve has a plunger (34) that is moved by an actuating solenoid (14). The actuating solenoid (14) surrounds a large diameter segment of the plunger (34). A smaller position sensing coil (16) surrounds a smaller diameter segment of the plunger (34) (and is thus coaxial with the larger actuating solenoid (14) for outputting a signal representative of the position of the plunger (34).

## Description

### Technical Field

The present invention relates generally to solenoid-operated valves, and more particularly to sensing the position of the plunger of a vehicle valve.

### Background of the Invention

Modem vehicles have many control systems in which a controller, in response to sensor signals, actuates vehicle components to control the vehicle. As one illustration, an engine control module (ECM) might receive input from various sensors and in response turn "on" and "off" actuation coils of various hydraulic valves to cause an automatic transmission to shift. Some applications where actuators are utilized require armature position sensing to help protect the system against severe failure modes. Such is the case for valves that are used to direct fluid to the engine cylinders to help cool and lubricate them. Closed-loop feedback is used to detect whether the actuator function has degraded or been lost. As understood herein, a need for simply, inexpensively, and elegantly indicating valve position is required.

### Summary of the Invention

A valve has a valve body and a plunger disposed in the valve body and reciprocally movable therein. An actuating solenoid is disposed in a surrounding relationship with the plunger and is energizable to cause the plunger to move, while a position sensing coil is also disposed in a surrounding relationship with the plunger and outputs a signal representative of the position of the plunger.

In some embodiments the plunger may be formed with a first segment and a second segment having a diameter smaller than the diameter of the first segment, with the actuating solenoid surrounding the first segment and the position sensing coil surrounding the second segment. The actuating solenoid and position sensing coil can be coaxial with each other, and if desired the position sensing coil can have a smaller diameter than the actuating solenoid.

In non-limiting implementations a rod may be centrally disposed in the plunger and staked thereto. In the non-limiting implementation the rod extends through a stop that is press-fit into the valve body, and the rod terminates in a poppet.

In another aspect, a valve has an actuating solenoid, a position sensing coil axially spaced from the actuating solenoid, and a plunger axially movable centrally in the actuating solenoid and the position sensing coil.

In yet another aspect, a valve has a plunger, electrically energizable actuating means for moving the plunger, and coil means for sensing a position of the plunger.

The details of the present invention, both as to its structure and operation, can best be understood in reference to the accompanying drawings, in which like reference numerals refer to like parts, and in which:

### Brief Description of the Drawings

Figure 1 is a block diagram showing the present valve in one non-limiting environment;
Figure 2 is a cross-section of the valve with the solenoid energized; and
Figure 3 is a graph showing the inductance response of the position sensing coil as a function of plunger position.

### Description of the Preferred Embodiments

The present invention is intended for application in automotive vehicle suspension systems and will be described in that context. It is to be understood, however, that the present invention could also be successfully applied in many other applications.

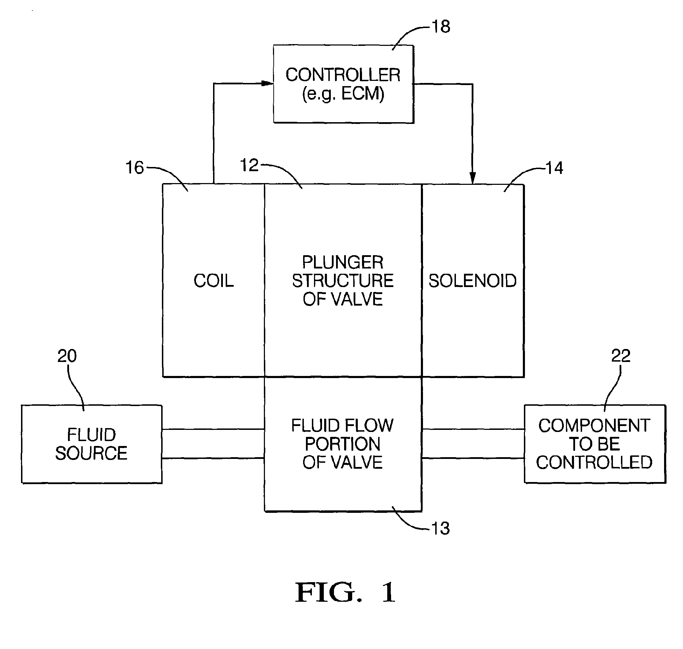

Referring initially to Figure 1, a valve 10 is shown that includes a rigid valve body 12 containing the below-described plunger structures that alter fluid flow paths in a fluid flow portion 13 of the valve in accordance with principles known in the art. An actuating solenoid 14 and a position sensing coil 16 are operably engaged with a plunger in the body 12 as set forth further below. The actuating solenoid 14 can be energized and deenergized under the control of a controller 18 such as an engine control module (ECM) to move below-described components within the valve body 12 to selectively port hydraulic fluid from a fluid source 20 to and from a hydraulic component 22, such as a vehicle automatic transmission or other vehicle hydraulically-operated component. The position sensing coil 16 can send a position signal to the controller 18 for, e.g., monitoring the valve position and/or alarming if the sensed valve position is not an expected position and/or displaying an indication of valve position.

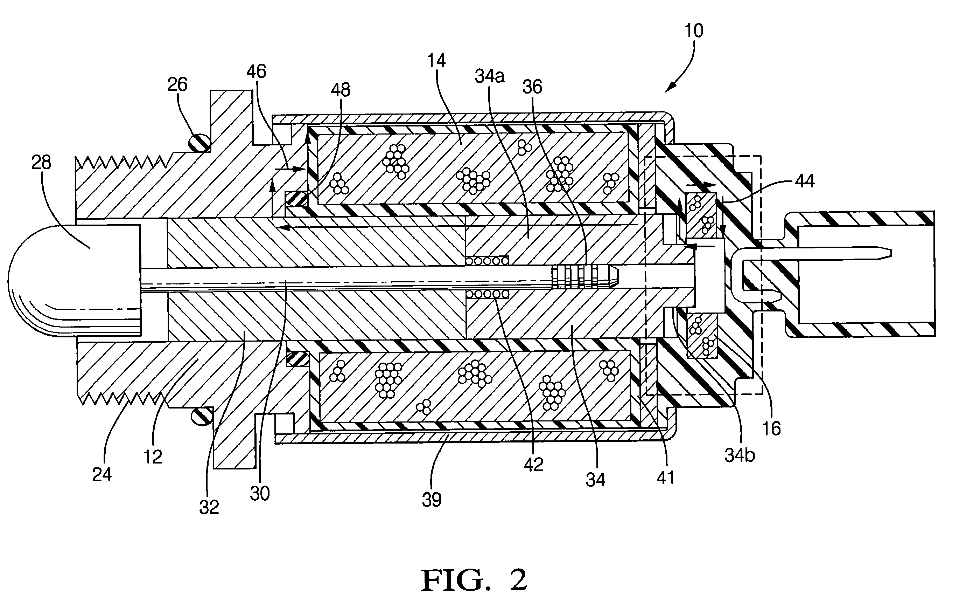

Figure 2 illustrates details of the valve. The valve is externally housed by the valve body 12. It is to be understood that for completeness, non-limiting valving structure is shown in Figure 2 for illustration. For example, in one non-limiting implementation the valve body 12 may have a set of threads 24 on one end that may extend into another valve body (not shown). In this non-limiting embodiment an external o-ring 26 fits over the valve body 12 and is set next to the set of threads 24. Extending out of the end of the valve body 12 with the set of threads 24 is a poppet 28.

A rod 30 is centrally affixed to the poppet 28 and has a smaller diameter than the poppet 28. The rod 30 extends down the center of the valve 10 through an immovable stop 32 that is affixed with the valve body 12 by, e.g., press-fitting and that radially bears the rod 30. The rod 30 is bound to a movable plunger 34 by a bond structure 36, which can be, in one non-limiting implementation, staking.

The plunger 34 can be moved by the energizable actuator solenoid 14. Surrounding the actuator solenoid 14 and disposed within or otherwise coupled to the valve body 12 is a frame 39. Coaxially aligned with the frame 39 is a secondary plate 41 with a diameter as large as that of the actuator solenoid 14.

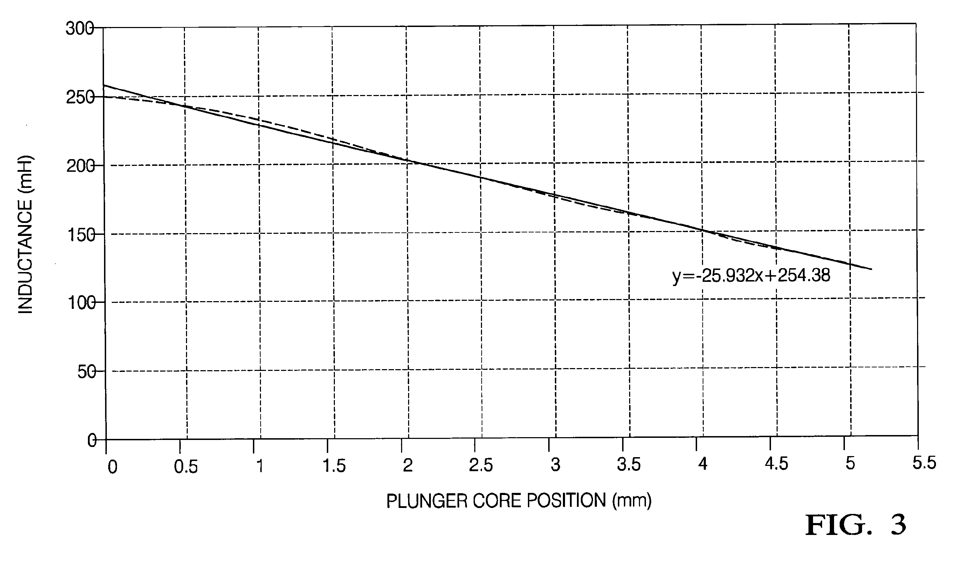

In accordance with the present invention, the actuator solenoid 14 is disposed in a surrounding relationship with a first, relatively (radially) large segment 34a of the plunger 34. The plunger 34 is also formed with a second segment 34b that has a smaller diameter than the first segment 34a and that is surrounded by the position sensing coil 16. Accordingly, the position sensing coil 16 is coaxially aligned with the actuator solenoid 14 so that it outputs a signal that varies linearly with the position of the plunger 34 as shown in Figure 3. The position sensing coil 16 also has a smaller inside diameter than the actuator solenoid 14 so as to be closely juxtaposed with the radially smaller second segment 34b of the plunger 34.

In the non-limiting embodiment shown, a spring 42 may be coaxially aligned with the actuator solenoid 14 and disposed around the rod 30 to urge the plunger to the right looking down in Figure 2. The position sensing coil 16 surrounds the path of the end of the plunger 34 and has a displacement sensing magnetic flux path 44 (indicated by four arrows). Similarly, the actuator solenoid 14 has an actuation magnetic flux path 46 (indicated by arrows) that moves around an internal o-ring 48 disposed in the valve body 12.

Once the actuator solenoid 14 is energized, the plunger 34 moves left looking down on Figure 2, thereby moving the rod 30 with poppet 28 in the same direction.

As mentioned above, the inductive sensing relationship to distance in one non-limiting implementation is shown in Figure 3. As shown, the displacement discrimination as a function of inductance increases as the armature (plunger 34) stroke to sensing coil 16 ID ratio increases. This increase in discrimination allows for discrete armature position sensing as well as increases the calibration point separation between the open and closed position (change in slope).

While the particular SOLENOID-OPERATED VALVE WITH COIL FOR SENSING PLUNGER POSITION as herein shown and described in detail is fully capable of attaining the above-described objects of the invention, it is to be understood that it is the presently preferred embodiment of the present invention and is thus representative of the subject matter which is broadly contemplated by the present invention, and that the scope of the present invention is accordingly to be limited by nothing other than the appended claims, in which reference to an element in the singular is not intended to mean "one and only one" unless explicitly so stated, but rather "one or more". It is not necessary for a device or method to address each and every problem sought to be solved by the present invention, for it to be encompassed by the present claims. Furthermore, no element, component, or method step in the present disclosure is intended to be dedicated to the public regardless of whether the element, component, or method step is explicitly recited in the claims.

## Claims

1. A valve, comprising:
a valve body (12);
a plunger (34) disposed in the valve body (12) and reciprocally movable therein;
an actuating solenoid (14) disposed in a surrounding relationship with the plunger (34) and energizable to cause the plunger (34) to move; and
a position sensing coil (16) disposed in a surrounding relationship with the plunger (34) and outputting a signal representative of the position of the plunger (34).

2. The valve of Claim 2, wherein the plunger (34) is formed with a first segment (34a) and a second segment (34b) having a diameter smaller than the diameter of the first segment (34a), the actuating solenoid (14) surrounding the first segment (34a) and the position sensing coil (16) surrounding the second segment (34b).

3. The valve of Claim 1, wherein the actuating solenoid (14) and position sensing coil (16) are coaxial with each other.

4. The valve of Claim 1, wherein the position sensing coil (16) has a smaller diameter than the actuating solenoid (14).

5. The valve of Claim 1, comprising a rod (30) centrally disposed in the plunger (34) and affixed thereto, the rod (30) extending through a stop (32), the stop (32) being immovably affixed within the valve body (12), the rod (30) terminating in a poppet (28).

6. The valve of Claim 5, wherein the rod (30) is staked to the plunger (34) and the stop (32) is press-fit into the valve body (12).

7. A valve, comprising:
an actuating solenoid (14);
a position sensing coil (16) axially spaced from the actuating solenoid (14); and
a plunger (34) axially movable centrally in the actuating solenoid (14) and the position sensing coil (16).

8. The valve of Claim 7, comprising a valve body (12) holding the plunger (34).

9. The valve of Claim 7, wherein the actuating solenoid (14) is energizable to cause the plunger (34) to move.

10. The valve of Claim 9, wherein the position sensing coil (16) outputs a signal representative of the position of the plunger (34).

11. The valve of Claim 10, wherein the plunger (34) is formed with a first segment (34a) and a second segment (34b) having a diameter smaller than the diameter of the first segment (34a), the actuating solenoid (14) surrounding the first segment (34a) and the position sensing coil (16) surrounding the second segment (34b).

12. The valve of Claim 11, wherein the position sensing coil (16) has a smaller diameter than the actuating solenoid (14).

13. The valve of Claim 8, comprising a rod (30) centrally disposed in the plunger (34) and affixed thereto, the rod (30) extending through a stop (32), the stop (32) being immovably affixed within the valve body (12), the rod (30) terminating in a poppet (28).

14. A valve, comprising:
a plunger (34);
electrically energizable actuating means (14) for moving the plunger (34); and
coil means (16) for sensing a position of the plunger (34).

15. The valve of Claim 14, wherein the electrically energizable actuating means includes at least one actuating solenoid (14) and the coil means includes at least one position sensing coil (16).

16. The valve of Claim 15, comprising a valve body (12) holding the plunger (34).

17. The valve of Claim 15, wherein the position sensing coil (16) outputs a signal representative of the position of the plunger (34).

18. The valve of Claim 14, wherein the plunger (34) is formed with a first segment (34a) and a second segment (34b) having a diameter smaller than the diameter of the first segment (34a), the electrically energizable actuating means surrounding the first segment (34a) and the coil means surrounding the second segment (34b).

19. The valve of Claim 14, wherein the coil means has a smaller diameter than the electrically energizable actuating means.

20. The valve of Claim 14, comprising a rod (30) centrally disposed in the plunger (34) and affixed thereto, the rod (30) extending through a stop (32), the stop (32) being immovably affixed within the valve body (12), the rod (30) terminating in a poppet (28).
